# EUROPÄISCHE PATENTSCHRIFT

(11) **EP 1 893 380 B1**
(45) Veröffentlichungstag und Bekanntmachung des Hinweises auf die Patenterteilung: **28.03.2012**
(21) Anmeldenummer: 06754836.2
(22) Anmeldetag: 25.04.2006
(51) Int. Cl.: B23H 9/14, B23H 7/20, B23K 26/38, B23K 26/03

(54) **VORRICHTUNG UND VERFAHREN ZUR ÜBERWACHUNG EINES FERTIGUNGSVERFAHRENS ZUR HERSTELLUNG EINER DURCHGANGSBOHRUNG**
DEVICE AND METHOD FOR MONITORING A PRODUCTION METHOD FOR THE PREPARATION OF A THROUGH DRILLING
DISPOSITIF ET PROCEDE DE CONTROLE D'UN PROCESSUS DE PERÇAGE D'UN TROU TRAVERSANT

(30) Priorität: 14.06.2005 DE 102005027363
(43) Veröffentlichungstag der Anmeldung: 05.03.2008
(73) Patentinhaber: ROBERT BOSCH GMBH, 70442 Stuttgart (DE)
(72) Erfinder: VORMANN, Karsten, 58579 Schalksmuehle (DE); KLECKNER, Josef, 71229 Leonberg (DE); RUDOLF, Uwe, 74206 Bad Wimpfen (DE); SCHOEPF, Martin, 70499 Stuttgart (DE)
(86) Internationale Anmeldenummer: PCT/EP2006/061810
(87) Internationale Veröffentlichungsnummer: WO 2006/133991

(56) Entgegenhaltungen:
- GB-A- 2 254 280
- US-A- 4 504 727
- US-A- 4 960 970

## Beschreibung

### Stand der Technik

Die vorliegende Erfindung betrifft eine Vorrichtung und ein Verfahren zur Überwachung eines Fertigungsverfahrens zur Herstellung von Durchgangsbohrungen in Werkstücken, insbesondere mittels Funkenerosion.

Die Funkenerosion (EDM = Electrical Discharge Machining) ist ein abtragendes Fertigungsverfahren, welches beispielsweise zur Herstellung von Bohrungen und insbesondere auch von Durchgangsbohrungen verwendet wird. Die Funkenerosion zählt hierbei zu den elektrothermischen Abtrageverfahren und gehört aufgrund seiner Parametervielfalt zu den sehr komplexen Bearbeitungsprozessen. Zur Überwachung des Prozesses werden üblicherweise Strom- und Spannungsmessungen an der Erodiermaschine durchgeführt. Wenn beispielsweise ein Kontakt zwischen der Elektrode und dem Werkstück auftritt, wird dies anhand der veränderten Strom- bzw. Spannungswerte erfasst und die Elektrode wird entgegen ihrer Bewegungsrichtung zurückbewegt, um wieder außer Kontakt mit dem Werkstück zu kommen. Anschließen wird die Elektrode wieder langsam in die Arbeitsposition relativ zum Werkstück gebracht. Bei der Herstellung von Durchgangsbohrungen ergibt sich nun manchmal das Problem, dass im Bereich der Mündung der Durchgangsbohrung zu einer benachbarten Wand im Werkstück nur ein geringer Abstand vorhanden ist. Dadurch kann es bei einem zu großen Vorschub der Elektrode dazu kommen, dass die dem Durchbruch der Durchgangsbohrung gegenüberliegende Wand durch den Erodierprozess ebenfalls teilweise abgetragen wird. Dies führt dazu, dass bei Herstellen einer Durchgangsbohrung gegen Ende des Prozesses die Vorschubgeschwindigkeit im Vergleich zum übrigen Prozess reduziert wird, um zu verhindern, dass nach dem Durchbruch der Bohrung weitere Teile des Werkstücks durch die Elektrode beschädigt werden. Allerdings kann nicht zuverlässig festgestellt werden, wann ein Durchbruch der Bohrung beginnt bzw. wann der Durchbruch vollständig fertiggestellt ist. Dies führt in der Praxis dazu, dass beispielsweise bei der Herstellung von Kraftstoffeinspritzdüsen bei der Anwendung der Funkenerosion zur Herstellung des Spritzloches ein hoher Fertigungsausschuss vorhanden ist. Daher wird bei derartigen Werkstücken eine genaue Qualitätskontrolle durchgeführt und häufig Nacharbeiten angesetzt, was den Arbeitsprozess verteuert. Das oben dargestellte Problem tritt jedoch auch bei anderen Fertigungsverfahren zur Herstellung von Durchgangsbohrungen auf. Ferner sind aus der GB 2 254 280 A ein Verfahren gemäß dem Oberbegriff des Anspruchs 1 und eine Vorrichtung gemäß dem Oberbegriff des Anspruchs 5 bekannt, bei dem mittels Luftschall und unter Verwendung von Wachs in einem Hohlraum, in welchem die Durchgangsbohrung führen soll, ein Durchbruch bestimmt wird.

### Vorteile der Erfindung

Das erfindungsgemäße Verfahren zur Überwachung der Herstellung einer Durchgangsbohrung mit den Merkmalen des Patentanspruchs 1 weist demgegenüber den Vorteil auf, dass es auf einfache und sichere Weise den Durchbruch durch ein Werkstück bzw. einen Werkstückbereich und die Fertigstellung der Durchgangsbohrung erkennen kann. Das Verfahren kann dabei besonders kostengünstig und einfach durchgeführt werden und ist ferner auch zur Nachrüstung an bereits im Einsatz befindlichen Maschinen geeignet. Das erfindungsgemäße Verfahren ist dabei äußerst zuverlässig, so dass eine hohe Fertigungsqualität hergestellt werden kann. Das erfindungsgemäße Verfahren erfasst dazu den Körperschall, welcher durch die Bearbeitung des Werkstücks zur Herstellung der Durchgangsbohrung erzeugt wird. Anhand der aufgenommenen Ist-Werte kann dann ein Durchbruch durch das Werkstück bestimmt werden und es kann ebenfalls bestimmt werden, wenn die Bohrung vollständig fertiggestellt ist. Erfindungsgemäß wurde hierbei festgestellt, dass bei der Herstellung einer Durchgangsbohrung mittels Funkenerosion, der Körperschall im Wesentlichen eine Art "Badewannen"-Kurve beschreibt. Am Beginn des Bearbeitungsvorgangs sind die Werte für den Körperschall relativ hoch. Wenn der Bohrungsansatz einmal hergestellt ist, gehen die Werte zurück und verbleiben auf einer gewissen Höhe. Sobald die Bohrung nur ein kleines Stück durch das Werkstück durchbricht, steigen die Werte des Körperschalls wieder signifikant an. Somit kann anhand der ansteigenden Werte erkannt werden, wann der Durchbruchszeitpunkt erreicht ist. Wenn die Durchgangsbohrung fertiggestellt ist, z.B. wenn bei der Funkenerosion die Elektrode vollständig durch das Werkstück hindurchgegangen ist, geht der Körperschall fast auf Null zurück, so dass auch sofort erkannt werden kann, wann die Durchgangsbohrung fertiggestellt ist. Dadurch ist es möglich, dass der Prozess sofort beendet wird, ohne dass weitere Beschädigungen an dem Werkstück auftreten. Die Körperschallwerte werden an einem Werkstückhalter aufgenommen, welcher das Werkstück hält. Dadurch kann das erfindungsgemäße Verfahren besonders einfach und kostengünstig durchgeführt werden, da keinerlei Sensoren o.Ä. am Werkstück angebracht werden müssen.

Die Unteransprüche zeigen bevorzugte Weiterbildungen der Erfindung.

Vorzugsweise werden die erfassten Istwerte des Körperschalls mit gespeicherten Sollwerten für den Körperschall verglichen und der Durchbruch und/oder die Fertigstellung der Durchgangsbohrung anhand des Vergleichs mit den gespeicherten Sollwerten bestimmt. Dadurch kann eine zusätzliche Sicherheit für den Fertigungsprozess garantiert werden.

Vorzugsweise wird während des Bearbeitungsvorgangs von den aufgenommenen Istwerten des Körperschalls ein Mittelwert gebildet. Dieser Mittelwert wird zur Ermittlung einer Prozessgeschwindigkeit verwendet. Je höher der Mittelwert ist, umso höher ist die Bohrgeschwindigkeit und umso höher ist somit die Prozessgeschwindigkeit. Je geringer der Mittelwert ist, umso geringer ist die Bohrgeschwindigkeit und entsprechend umso geringer ist die Prozessgeschwindigkeit. Es sei angemerkt, dass die Mittelwertbildung auch erst dann durchgeführt werden kann, wenn der Bohrungsanfang im Werkstück fertiggestellt ist und die Werte für den Körperschall sich im mittleren Bereich der "Badewannen"-Kurve befinden.

Weiter bevorzugt werden die Körperschallwerte mittels mehrerer Sensoren aufgenommen. Dadurch können die verschiedenen aufgenommenen Körperschallwerte miteinander verglichen werden bzw. ein Mittelwert der aufgenommenen. Körperschallwerte gebildet werden, welcher dann als Prozesswert zur Bestimmung des Durchbruchs und/oder der Fertigstellung der Durchgangsbohrung verwendet wird.

Die vorliegende Erfindung verwendet somit den bei einer Herstellung einer Durchgangsbohrung erzeugten Körperschall zur Überwachung des Bearbeitungsvorgangs. Insbesondere wird der Körperschall zur Bestimmung eines Durchbruchs z.B. einer Elektrode durch das Werkstück und zur Bestimmung einer Fertigstellung der Durchgangsbohrung verwendet.

Die erfindungsgemäße Funkenerosionsmaschine mit einer Vorrichtung zur Überwachung eines Fertigungsverfahrens zur Herstellung einer Durchgangsbohrung umfasst einen Sensor zur Aufnahme von Körperschall und eine Steuereinrichtung. Die Steuereinrichtung empfängt die vom Sensor aufgenommenen Körperschallsignale und bestimmt anhand der aufgenommenen Werte für den Körperschall, ob ein Durchbruch durch das Werkstück erfolgt ist und/oder ob die Durchgangsbohrung fertiggestellt ist. Ferner umfasst die Vorrichtung einen Werkstückhalter, um das zu bearbeitende Werkstück zu bearbeiten. Der oder die Sensoren zur Aufnahme des Körperschalls sind dabei an dem Werkstückhalter angeordnet. Dies ist besonders vorteilhaft, da die Sensoren nicht am Werkstück befestigt werden müssen. Mit anderen Worten muss der Werkstückhalter lediglich das zu bearbeitende Werkstück aufnehmen und die Bearbeitung kann sofort beginnen. Die Prozessüberwachung ist dabei ohne Einschränkungen möglich, da der Körperschall vom Werkstück auf den Werkstückhalter übertragen wird und somit auch am Werkstückhalter aufgenommen werden kann.

Vorzugsweise umfasst die Steuereinrichtung eine Vergleichseinrichtung und einen Speicher, in welchem die vorgegebenen Werte für den Körperschall gespeichert sind, wobei die Vergleichseinrichtung die aufgenommenen Ist-Werte für den Körperschall mit den gespeicherten Soll-Werten für den Körperschall vergleicht.

Besonders bevorzugt ist die Steuereinrichtung in eine Maschinensteuerung der Bearbeitungsmaschine integriert. Dadurch können die Herstellkosten besonders klein gehalten werden und ein besonders kompakter Aufbau kann realisiert werden. Dadurch ist es auch einfach möglich, beispielsweise die Maschine automatisch anzuhalten, wenn der Durchbruch durch das Werkstück aufgetreten ist, oder wenn die Durchgangsbohrung vollständig hergestellt ist.

Bevorzugt umfasst die Maschine zwei oder mehrere Sensoren zur Aufnahme des Körperschalls. Dadurch kann einerseits eine redundantes System bereitgestellt werden und andererseits können die aufgenommenen Werte von unterschiedlichen Sensoren miteinander verglichen werden und eine Plausibilitätskontrolle durchgeführt werden.

Weiter bevorzugt umfasst die Steuereinrichtung der Vorrichtung eine Rechnereinheit, um einen Mittelwert aus den aufgenommenen Ist-Werten des Körperschalls zu bilden. Dieser Mittelwert kann dann zur Bestimmung einer Bohrgeschwindigkeit des Bearbeitungsvorgangs herangezogen werden, wobei die Bohrgeschwindigkeit umso höher ist, je höher der Mittelwert ist.

### Zeichnung

Nachfolgend wird ein bevorzugtes Ausführungsbeispiel der Erfindung anhand der Zeichnung im Detail beschrieben. In der Zeichnung ist:
- Figur 1: eine schematische Schnittansicht einer Vorrichtung zur Überwachung eines Fertigungsverfahrens zur Herstellung einer Durchgangsbohrung mittels Funkenerosion gemäß einem Ausführungsbeispiel der Erfindung, wobei gerade der Durchbruch der Elektrode durch das Werkstück dargestellt ist,
- Figur 2: eine zu Figur 1 ähnliche Ansicht, wobei die Herstellung der Durchgangsbohrung abgeschlossen ist und
- Figur 3: ein Diagramm, welches die aufgenommenen Werte des Körperschalls über die Zeit bei der Funkenerosionsbearbeitung darstellt.

### Beschreibung des Ausführungsbeispiels

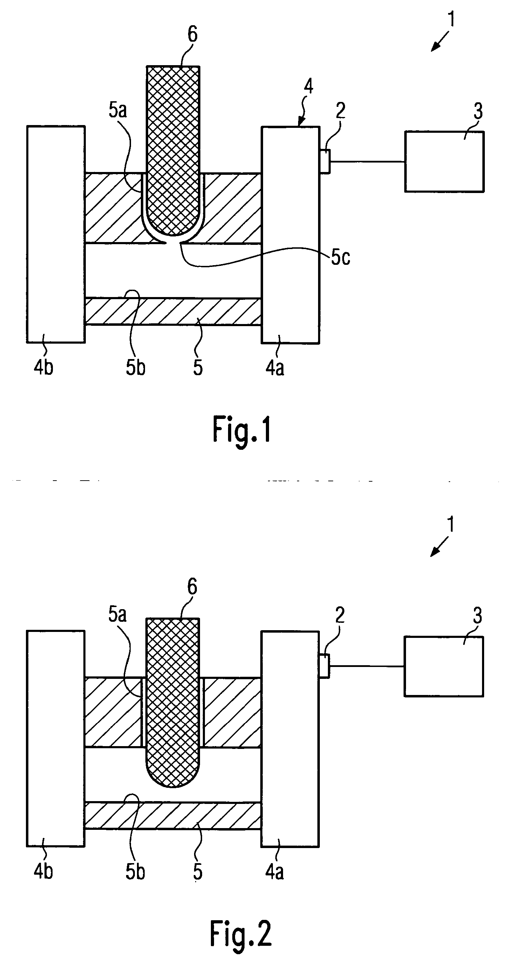

Nachfolgend wird unter Bezugnahme auf die Figuren 1 bis 3 ein Ausführungsbeispiel der Erfindung im Detail beschrieben.

Die Überwachungsvorrichtung 1 für ein Funkenerosions-Fertigungsverfahren umfasst einen Sensor 2, welcher mit einer Steuereinrichtung 3 verbunden ist. Die Steuereinrichtung 3 ist bevorzugt auch die Maschinensteuerung der Funkenerosionsmaschine. Die Steuereinrichtung 3 umfasst einen Speicher zur Speicherung von Sollwerten für den Körperschall und eine Recheneinheit zur Berechnung eines Mittelwerts von aufgenommenen Ist-Werten des Körperschalls und für einen Soll-Ist-vergleich der Körperschallwerte. Ferner umfasst die Überwachungsvorrichtung 1 einen Werkstückhalter 4 mit einer ersten Spannbacke 4a und einer zweiten Spannbacke 4b. Ein Werkstück 5 ist zwischen den beiden Spannbacken 4a, 4b eingespannt. Die Funkenerosionsmaschine ist aus Gründen der Übersichtlichkeit nicht vollständig dargestellt. Mit dem Bezugszeichen 6 ist lediglich eine Elektrode der Maschine gekennzeichnet.

Wie aus den Figuren 1 und 2 ersichtlich ist, soll eine Durchgangsbohrung 5a in dem Werkstück 5 hergestellt werden. Die Durchgangsbohrung 5a mündet dabei in eine zweite Bohrung 5b. Da die Durchmesser der Bohrungen relativ klein sind, muss insbesondere verhindert werden, dass bei der Herstellung der Durchgangsbohrung 5a die Wände der zweiten Bohrung 5b beschädigt werden, indem die Elektrode 6 den Wänden zu nahe kommt und dort ebenfalls Material abträgt. Figur 1 zeigt dabei einen Zustand des Bearbeitungsvorgangs, in welchem die Elektrode 6 gerade den Durchbruch 5c von der Durchgangsbohrung 5a zur zweiten Bohrung 5b erzeugt hat. Figur 2 zeigt einen Zustand, in welchem die Durchgangsbohrung 5a vollständig hergestellt ist. Dabei ist ein Abstand der Elektrode zu den Wänden der Seitenbohrung 5b noch ausreichend, d.h., an der Wand der Bohrung 5b wird kein Material abgetragen.

Der während der Bearbeitung des Werkstücks 5 durch die Funkenerosion erzeugte Körperschall wird über das Werkstück 5 auf den Werkstückhalter 4 übertragen und am Werkstückhalter 4 durch den Sensor 2 aufgenommen. Die aufgenommenen Ist-Werte werden vom Sensor 2 zur Steuereinrichtung 3 übermittelt. Der Sensor 2 kann dabei an einer beliebigen Stelle am Werkstückhalter 4 angeordnet werden, da der Körperschall zu allen Außenseiten des Werkstückhalters übertragen wird. Somit kann je nach Anwendungsfall eine optimale Anordnung des Sensors 2 am Werkstückhalter 4 erfolgen. Durch die Anordnung des Sensors 2 am Werkstückhalter 4 kann ferner ein besonders schneller Fertigungsvorgang ohne Rüstzeiten beispielsweise für die Anbringung des Sensors am Werkstück o.Ä. ermöglicht werden.

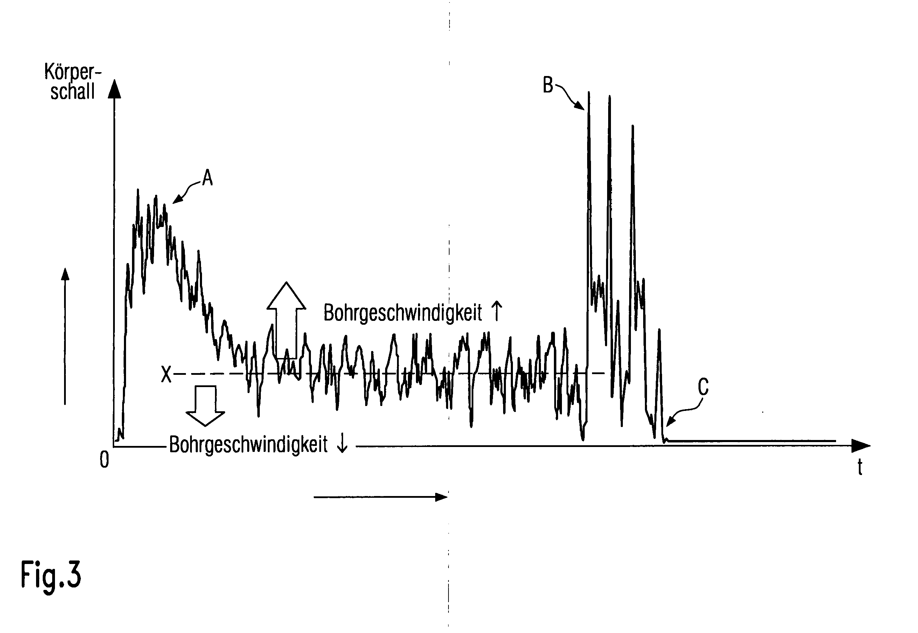

Figur 3 zeigt ein Diagramm des Körperschalls über die Zeit t bei der Herstellung der in den Figuren 1 und 2 gezeigten Durchgangsbohrung 5a mittels Funkenerosion. Wie aus Figur 3 ersichtlich ist, sind die Körperschallwerte zu Beginn des Prozessvorgangs relativ hoch. Dies ist in Figur 3 mit dem Pfeil A gekennzeichnet. Dies hängt insbesondere damit zusammen, dass zum Prozessbeginn zuerst der Bohrungsansatz hergestellt werden muss. Wenn dieser Bohrungsansatz hergestellt ist, werden die Werte für den Körperschall geringer, da nun die Bohrung gleichmäßig gebildet werden kann. Sobald der in Figur 1 gezeigte Durchbruch der Elektrode auftritt, steigen die Körperschallwerte sofort signifikant an, was in Figur 3 durch den Pfeil B gekennzeichnet ist. Die Werte bleiben aufgrund der nun ungleichmäßigen Abtragung am Bohrungsgrund mit Durchbruch hoch, bis die Elektrode vollständig durchgebrochen ist (Zustand wie in Figur 2 gezeigt). Dies ist in Figur 3 durch den Pfeil C gekennzeichnet. Nach dem vollständigen Durchbruch gehen die Körperschallwerte auf Null zurück.

Somit ergibt sich bei der Bohrungsherstellung für den Körperschall eine "Badewannen"-Kurve mit hohen Werten zu Beginn und gegen Ende des Fertigungsvorgangs. Anhand dieser charakteristischen Werte kann somit der Fortgang des Prozesses überwacht werden. Um eine Aussage über die Bohrgeschwindigkeit treffen zu können, kann ferner ein Mittelwert X gebildet werden. Je höher dabei der Mittelwert X ist, umso höher ist auch die Bohrgeschwindigkeit. Da insbesondere zum Bohrungsbeginn relativ große Abweichungen auftreten können, wird der Mittelwert X bevorzugt im mittleren Bereich der "Badewannen"-Kurve, d.h. wenn der Fertigungsvorgang kontinuierlich abläuft, gebildet.

Ferner sei angemerkt, dass anhand der Körperschallwerte auch Prozessstörungen wie z.B. Kurzschlüsse oder eine nicht optimale Regelung des Vorschubs der Elektrode 6 festgestellt werden können. Die vorliegende Erfindung verwendet somit die bei der Funkenerosion auftretenden Körperschallwerte zur Überwachung des Prozesses einerseits hinsichtlich der Tatsache, ob ein Durchbruch vorliegt bzw. ob die Bohrung vollständig erzeugt wurde, und andererseits hinsichtlich eventuell vorhandener Probleme des Prozesses. Die vorliegende Erfindung eignet sich besonders bevorzugt bei der Herstellung von Spritzlöchern von Kraftstoffeinspritzdüsen oder Drosselbohrungen in Kraftstoffeinspritzeinrichtungen o.Ä..

Die vorliegende Erfindung kann besonders gut in Verbindung mit einem Funkenerosions-Abtrageverfahren angewandt werden.

## Patentansprüche

1. Verfahren zur Überwachung eines Fertigungsverfahrens zur Herstellung einer Durchgangsbohrung (5a) mittels Funkenerosion, umfassend die Schritte:
- Erfassen von Ist-Werten von Schall, welcher während der Bearbeitung erzeugt wird, und
- Bestimmen eines Durchbruchs und/oder einer Fertigstellung der Durchgangsbohrung (5a) anhand der aufgenommenen Ist-Werte des Schalls,
**dadurch gekennzeichnet,**
- **dass** der erfasste Schall Körperschall ist,
- wobei der Körperschall an einem Werkstückhalter (4) aufgenommen wird, welcher das Werkstück (5) hält, in dem die Durchgangsbohrung (5a) hergestellt werden soll, und
- wobei ein Sensor zur Aufnahme von Körperschall an dem Werkstückhalter (4) angeordnet ist.

2. Verfahren nach Anspruch 1, ferner umfassend die Schritte:
- Vergleichen der erfassten Ist-Werte des Körperschalls mit gespeicherten Soll-Werten für den Körperschall und
- Bestimmen eines Durchbruchs und/oder einer Fertigstellung der Durchgangsbohrung (5a) anhand des Vergleichs der Soll-Werte mit den Ist-Werten des Körperschalls.

3. Verfahren nach einem der vorhergehenden Ansprüche, **dadurch gekennzeichnet, dass** basierend auf den aufgenommenen Ist-Werten des Körperschalls ein Mittelwert (X) gebildet wird, welcher zur Ermittlung einer Prozessgeschwindigkeit verwendet wird.

4. Verfahren nach Anspruch 1, **dadurch gekennzeichnet, dass** der Körperschall mittels mehrerer Sensoren (2) aufgenommen wird.

5. Funkenerosionsmaschine mit einer Vorrichtung zur Überwachung eines Fertigungsverfahrens zur Herstellung einer Durchgangsbohrung (5a) mittels Funkenerosion, **gekennzeichnet durch** :
- einen Sensor (2) zur Aufnahme von Körperschall,
- eine Steuereinrichtung (3), welche die vom Sensor (2) aufgenommenen Körperschallsignale empfängt, wobei die Steuereinrichtung (3) anhand der aufgenommenen Ist-Werte für den Körperschall bestimmt, ob ein Durchbruch der Bohrung **durch** das Werkstück vorliegt und/oder ob die Durchgangsbohrung (5a) fertiggestellt ist, und
- einen Werkstückhalter (4) zum Halten des zu bearbeitenden Werkstücks (5), wobei ein Sensor (2) zur Aufnahme von Körperschall an dem Werkstückhalter (4) angeordnet ist.

6. Maschine nach Anspruch 5, **dadurch gekennzeichnet, dass** die Steuereinrichtung (3) eine Vergleichseinrichtung und einen Speicher umfasst, um die aufgenommenen Ist-Werte des Körperschalls mit im Speicher gespeicherten Soll-Werten für den Körperschall zu vergleichen.

7. Maschine nach Anspruch 5 oder 6, **dadurch gekennzeichnet, dass** die Steuereinrichtung (3) in eine Maschinensteuerung der Maschine zur Herstellung der Durchgangsbohrung (5a) integriert ist.

8. Maschine nach einem der Ansprüche 5 bis 7,
**gekennzeichnet durch** zwei oder mehrere Sensoren (2) zur Aufnahme von Körperschall, die jeweils mit der Steuereinrichtung (3) verbunden sind.

9. Maschine nach einem der Ansprüche 5 bis 8, **dadurch gekennzeichnet, dass** die Steuereinrichtung (3) ferner eine Rechnereinheit umfasst, um einen Mittelwert (X) aus den aufgenommenen Ist-Werten des Körperschalls zu bilden und basierend auf dem Mittelwert (X) eine Bohrgeschwindigkeit des Bearbeitungsvorgangs berechnet.

## Claims

1. Method for monitoring a production method for producing a through-drilling (5a) by means of electrical discharge machining, comprising the steps of:
- detecting actual values of sound that is produced during the machining, and
- determining a breakthrough and/or a completion of the through-drilling (5a) on the basis of the recorded actual values of the sound,
**characterized**
- **in that** the detected sound is structure-borne sound,
- the structure-borne sound being recorded at a workpiece holder (4) which holds the workpiece (5) in which the through-drilling (5a) is to be produced, and
- a sensor for recording structure-borne sound being arranged on the workpiece holder (4).

2. Method according to Claim 1, also comprising the steps of:
- comparing the detected actual values of the structure-borne sound with stored desired values for the structure-borne sound and
- determining a breakthrough and/or a completion of the through-drilling (5a) on the basis of the comparison of the desired values with the actual values of the structure-borne sound.

3. Method according to one of the preceding claims, **characterized in that** a mean value (X) is formed on the basis of the recorded actual values of the structure-borne sound and is used for determining a process speed.

4. Method according to Claim 1, **characterized in that** the structure-borne sound is recorded by means of a number of sensors (2).

5. EDM machine with a device for monitoring a production method for producing a through-drilling (5a) by means of electrical discharge machining, **characterized by**
- a sensor (2) for recording structure-borne sound,
- a control device (3), which receives the structure-borne sound signals recorded by the sensor (2), the control device (3) determining on the basis of the recorded actual values for the structure-borne sound whether there is a breakthrough of the drilling through the workpiece and/or whether the through-drilling (5a) is complete, and
- a workpiece holder (4) for holding the workpiece (5) to be worked, a sensor (2) for recording structure-borne sound being arranged on the workpiece holder (4).

6. Machine according to Claim 5, **characterized in that** the control device (3) comprises a comparing device and a memory, in order to compare the recorded actual values of the structure-borne sound with desired values for the structure-borne sound that are stored in the memory.

7. Machine according to Claim 5 or 6, **characterized in that** the control device (3) is integrated in a machine control of the machine for producing the through-drilling (5a).

8. Machine according to one of Claims 5 to 7, **characterized by** two or more sensors (2) for recording structure-borne sound, which are respectively connected to the control device (3).

9. Machine according to one of Claims 5 to 8, **characterized in that** the control device (3) also comprises a computer unit, in order to form a mean value (X) from the recorded actual values of the structure-borne sound, and calculates on the basis of the mean value (X) a drilling speed of the machining operation.

## Revendications

1. Procédé de surveillance d'une opération de fabrication destinée à former un alésage de passage (5a) par érosion d'étincelles, le procédé comportant les étapes qui consistent à :
- saisir les valeurs effectives du bruit émis pendant le traitement et
- déterminer la présence d'une perforation et/ou la réalisation de l'alésage de passage (5a) à l'aide des valeurs effectives enregistrées du bruit,
**caractérisé en ce que**
- le bruit détecté est le bruit d'un corps,
- le bruit du corps est enregistré sur un porte-pièces (4) qui retient la pièce (5) dans laquelle l'alésage de passage (5a) doit être réalisé et
- une sonde d'enregistrement du bruit du corps est disposée sur le porte-pièces (4).

2. Procédé selon la revendication 1, comprenant en outre les étapes qui consistent à :
- comparer les valeurs effectives saisies du bruit du corps à des valeurs de consigne de bruit du corps conservées en mémoire et
- détermination de la présence d'une perforation et/ou de la réalisation de l'alésage de passage (5a) par comparaison entre les valeurs de consigne et les valeurs effectives du bruit du corps.

3. Procédé selon l'une des revendications précédentes, **caractérisé en ce qu'**une valeur moyenne (X) utilisée pour déterminer la vitesse de l'opération est formée sur base des valeurs effectives enregistrées du bruit du corps.

4. Procédé selon la revendication 1, **caractérisé en ce que** le bruit du corps est enregistré au moyen de plusieurs sondes (2).

5. Machine d'érosion par étincelles dotée d'un dispositif de surveillance d'une opération de fabrication destinée à former un alésage de passage (5a) par érosion d'étincelles,
**caractérisée par**
- une sonde (2) d'enregistrement du bruit d'un corps,
- un dispositif de commande (3) qui reçoit les signaux de bruit du corps enregistrés par la sonde (2), le dispositif de commande (3) déterminant à l'aide des valeurs effectives enregistrées du bruit du corps si l'alésage a percé la pièce et/ou si l'alésage de passage (5a) est terminé et
- un porte-pièces (4) qui retient la pièce (5) traitée, une sonde (2) étant disposée sur le porte-pièces (4) pour enregistrer le bruit du corps.

6. Machine selon la revendication 5, **caractérisée en ce que** le dispositif de commande (3) comporte un comparateur et une mémoire qui comparent les valeurs effectives enregistrées du bruit du corps à des valeurs de consigne du bruit du corps conservées dans la mémoire.

7. Machine selon les revendications 5 ou 6, **caractérisée en ce que** le dispositif de commande (3) est intégré dans la commande de la machine de réalisation de l'alésage de passage (5a).

8. Machine selon l'une des revendications 5 à 7, **caractérisée par** deux ou plusieurs sondes (2) d'enregistrement du bruit du corps, chacune reliée au dispositif de commande (3).

9. Machine selon l'une des revendications 5 à 8, **caractérisée en ce que** le dispositif de commande (3) comporte en outre une unité de calcul qui forme une valeur moyenne (X) des valeurs effectives enregistrées du bruit du corps et qui calcule la vitesse de forage de l'opération de traitement sur base de la valeur moyenne (X).
